# EUROPEAN PATENT APPLICATION

(11) **EP 4 524 681 A1**
(43) Date of publication of application: **19.03.2025**
(21) Application number: 23197740.6
(22) Date of filing: 15.09.2023
(51) Int. Cl.: G06F 1/14, H04L 43/106, G05B 7/02

(54) **METHODS AND SYSTEMS FOR MONITORING TIMESTAMPS IN A DATA ACQUIRED BY DATA ACQUISITION DEVICES IN AN INDUSTRIAL ENVIRONMENT**

(71) Applicant: Siemens Aktiengesellschaft, 80333 München (DE)
(72) Inventor: Fischer, Jan-Gregor, 85604 Zorneding (DE); Klein, Tamàs Màrton, 1085 Budapest (HU)
(74) Representative: Siemens Patent Attorneys

(57) **Abstract**

Method for monitoring timestamps in a data (100) acquired by a data acquisition device (101,201a, ..., 201n,302,303), wherein the data acquisition device (101,201a, ..., 201n,302,303) comprises a real clock (203a,...,203n), according to which the timestamps (102) are allocated to the data, and a virtual clock (202a,...,202n) progressing in essentially constant steps, according to which the data (100) is indexed (103), the method comprising:
- receiving an index value (103, 103a) and a respective timestamp (102, 102a) from the data (100),
- predicting a timestamp for a subsequent index value, based on the index value and the respective timestamp and on preceding index values (103) and respective timestamps (102), to generate a predicted timestamp for the subsequent index value,
- receiving a real clock timestamp for the subsequent index value,
- based on an acceptance criterion related to the real clock timestamp and to the predicted timestamp, providing the real clock timestamp or the predicted timestamp for the subsequent index value.

## Description

*Independent of the grammatical term usage, individuals with male, female or other gender identities are included within the term.*

The subject matter disclosed herein relates to methods and systems for monitoring timestamps in a data acquired by a data acquisition device, wherein the data acquisition device comprises a real clock, according to which the timestamps are tagged to the data, and a virtual clock progressing in essentially constant time steps, according to which time steps the data is indexed.

The subject matter also relates to a computer program comprising instructions, which, when executed by a computer, cause the computer to perform steps of the aforementioned method.

Data in an industrial environment is collected from various different resources, e.g., data acquisition devices. There can be a high frequency data from an asset, e.g., from a machine tool controller, and, at the same time, an ultra-high frequency data from additional sensors that are deployed to monitor and measure the asset, e.g., the machine, machine components, machining processes, workpiece and tool characteristics.

To bring all this data together into a common representation on a (single) data aggregation device, to synchronize the data streams with each other, e.g., with a tact of the machine tool controller and finally to provide a common representation of time-correlated data from different data sources for further processing on the data aggregation device and/or in a data lake outside of the data aggregation device is a hard task.

A possible approach to address this problem is to synchronize each single industrial data acquisition device providing the respective datastream with a given global clock. This can be done for example by means of the NTP protocol.

Some industrial control devices in operation today while supporting NTP protocol, have poor quality, unstable system clocks, and they lack any other synchronization interface that could serve as a basis for accurate time keeping and for potential correlations between them and other neighboring non-real-time devices. This can considerably affect the accuracy of applications that use either single or merged datastreams from different data acquisition devices to perform a certain task, such as condition monitoring, behavior prediction etc. In summary, relying on the NTP protocol only performs rather badly if at least one of the NTP participants show poor NTP synchronization accuracy.

Another approach, which is based on using cycle frequency based synchronization. This comprises extrapolating from a pre-determined usually known event then calculating elapsed time on all devices by multiplying the known cycle-time with the cycle-count difference. This technique requires, however, extremely stable hardware. In practice this solution is usable for small time-spans only, but for long stretches it can accumulate a lot of error while running. Also, the phase of extrapolating from a known event can lead to unpredictable inaccuracies - especially if, for example, the lead time between signal acquisition by a sensor and signal processing on the data aggregation device is not known or cannot be calculated in a deterministic way.

The object of the present disclosure is, therefore, to improve stability of the clocks of data acquisition devices and to enhance the accuracy of synchronization of data coming from different data acquisition devices.

The object is achieved by the method mentioned above, the method comprising:
- receiving an index value and a respective timestamp from the data,
- predicting a timestamp for a subsequent index value, e.g., an index value ensuing to the received index value, based on the index value and the respective timestamp and on preceding index values and respective timestamps, to generate a predicted timestamp for the subsequent index value,
- receiving a real clock timestamp for the subsequent index value,
- based on an acceptance criterion related to the real clock timestamp and to the predicted timestamp, providing the real clock timestamp or the predicted timestamp for the subsequent index value.

In other words, the method provides a controlling mechanism for the real clock of the data acquisition device, based on a reliable and robust virtual clock, i.e., progressing in essentially constant time steps, of the data acquisition device.

In an embodiment, the method further comprises, depending on whether a difference between the real clock timestamp and the predicted timestamp exceeds a determined threshold, providing the real clock timestamp or the predicted timestamp for the subsequent index value.

In an embodiment, the method further comprises: determining the threshold based on the previous index values and the respective real clock and predicted timestamps.

In an embodiment, the method further comprises, based on an acceptance criterion related to the real clock timestamp and to the predicted timestamp (e.g., if the difference between the real clock timestamp with the predicted timestamp exceeds the threshold), causing to correct the real clock timestamp based on the predicted timestamp.

In an embodiment, the method further comprises, based on an acceptance criterion related to the real clock timestamp and to the predicted timestamp (e.g., if the difference between the real clock timestamp with the predicted timestamp exceeds the threshold), updating the real clock timestamp for the subsequent index value by the predicted timestamp for the subsequent index value.

In an embodiment, the method further comprises: storing the previous/preceding index values and the respective timestamps for a predetermined time period (e.g., 5 min).

In an embodiment, the data, e.g., a datastream, is a measurement data of at least one physical parameter of an asset of an automation system.

In an embodiment, a first data acquired by a first data acquisition device and a second data acquired by a second data acquisition device, wherein the data acquisition devices comprise respective virtual clocks and their real clocks are jointly synchronized to a global clock, and the method further comprising:
- monitoring the timestamps in the first data, and
- aligning the timestamps in the second data to the timestamps in the first data.

The object is also achieved by a system for data acquisition with at least two data acquisition devices adapted to acquire data related to an industrial process and to provide respective datastreams and a data aggregation device adapted to receive the datastreams and comprising a computer program having instructions, which, when a computer executes the computer program, cause the computer to perform steps of the method disclosed herein, wherein the data aggregation device is configured to
- allow to select at least one of the datastreams to be a master datastream,
- process the master datastream by the computer program to correct the timestamps of the datastream,
- synchronize the at least one other datastream of the at least two data streams to the master datastream.

The subject-matter disclosed herein provides a hardwareagnostic method that facilitates integration of all kinds of data acquisition devices, e.g., external data sources.

Especially, when applied to machine tools, there is no need to change the original engineering of a machine tool (e.g., no changes to the ProfiNet / Profibus communication settings, no PLC engineering).

The method and system disclosed herein can be used as a noninvasive addon to existing hardware, e.g., assets of the industrial facility, e.g., machine tools.

The subject-matter disclosed herein can be effectively used even for brownfield controllers, which do not allow any changes or upgrades to their hardware or software.

The method and system disclosed herein can extend the capabilities for 3rd party controllers that allows to include 3rd party controller support in a much bigger scope of data integration.

The above and other aspects and advantages of the subject matter disclosed herein will be further discussed in conjunction with the accompanying drawings, which indicate only some possible ways that may be practiced. The like reference characters in the drawings refer to like parts throughout.
FIG 1 shows a flowchart of a method corresponding to the method according to the invention,
FIG 2 shows a flowchart of a method and an underlying system corresponding to an aspect of the present invention,
FIG 3 shows a system for synchronization of a secondary datastream with a primary datastream.

The reference signs used in the figures and in the claims are used for demonstrative purposes and shall not be considered as a limitation of corresponding claim features.

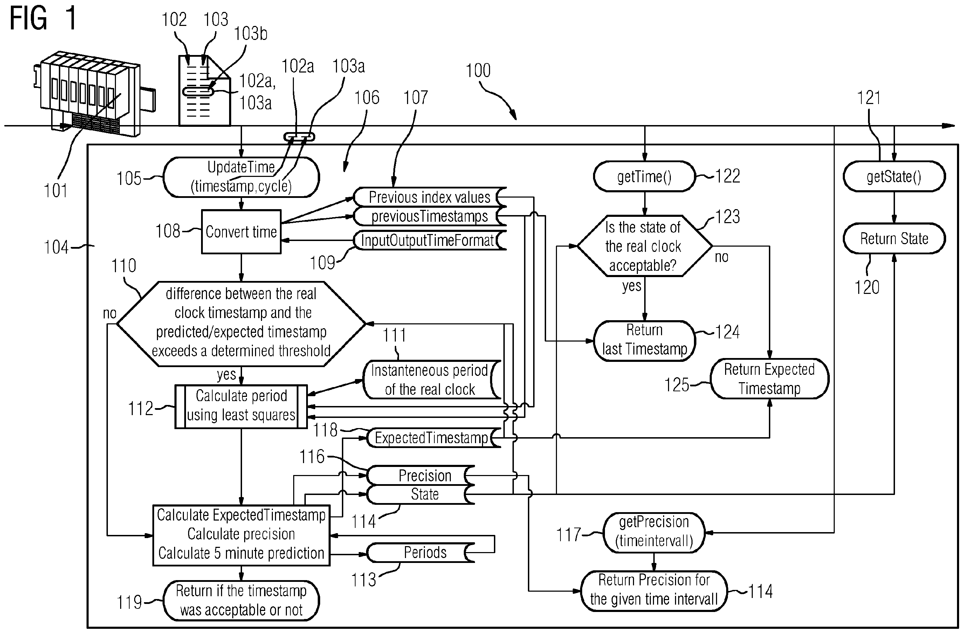

FIG 1 illustrates a flowchart of a method corresponding to the method according to the invention.

A data 100 is provided. The data 100 is acquired by a data acquisition device 101. The data acquisition device 101 comprises a real clock, according to which timestamps 102 are tagged to the data. The timestamps 102 are not guaranteed to be correct or precise and thus shall be monitored and corrected, if needed.

The data acquisition device 101 also comprises a virtual clock. The virtual clock progresses in essentially constant time steps. According to the time steps of the virtual clock the data 101 is provided with indexes 103, so that each data point in the data is assigned a pair of values: a timestamp and a respective index.

The data 100 can be a datastream of measurement data of at least one physical parameter of an asset of an automation system. The steps of the virtual clock can correspond to a sampling rate of the physical parameter.

A software module or a program routine 104 is provided, which can query the timestamps 102 and the indexes 103 from the data 100.

The software module 104 comprises instructions, which, when executed by a computer (not shown here for simplicity), cause the computer to perform steps of the method.

For an index value 103a and a respective timestamp 102a the software module 104 determines a timestamp for a subsequent index value 103b.

The values can be queried from the data 100 by the program routine 104, e.g., if a respective function 105 is called, or input into the software module 104 by a user.

The prediction can be performed by calling a prediction function 106 that is included in the software module 104. The prediction function 106 can calculate the predicted timestamp for the subsequent index value based on the received index value 103a and the respective timestamp 102a and on historical index values and their respective timestamps 107 acquired earlier from the data 100. These preceding timestamps and the corresponding index values 107 can be for example stored in a volatile memory of the computer allocated to the software module 104 during its runtime or in a non-volatile memory of the computer.

Storing the previous index values and the respective timestamps 107 can be ensured for a predetermined time period (e.g., 5 min), depending on an available memory.

Predicting timestamp for the subsequent index value can optionally comprise a time conversion step when the timestamps are converted in a predetermined time format. This might help to avoid conflicts between timestamp formats when timestamps of data from different data acquisition devices are monitored.

The predetermined time format can be set by a user via a time format interface 109.

It will be appreciated by the skilled person that the subsequent index value can be any index value ensuing the current index value 103a queried or received from the data 100 in some other way. E.g., the subsequent index value can be a proximate index value or other "future" index value that shall index a data point with a future timestamp. E.g., the subsequent index value can be chosen by a user.

The software module 104 receives or queries a real clock timestamp for the subsequent index value, e.g., from the data 100 directly.

The software module (or program routine) 104 calculates a difference 110 between the real clock timestamp and the predicted timestamp for the subsequent index value and, depending on whether the difference exceeds a determined threshold, provides the real clock timestamp or the predicted timestamp for the subsequent index value as an output.

In an embodiment, the program routine 104 can determine the threshold based on the previous index values and the respective real clock timestamps 107 and the respective predicted timestamps.

In other words, with each index value there can be two timestamps associated with this index values: a real clock timestamp and a predicted timestamp. All these values can be stored during the runtime of the routine 104 as described herein.

Below an example is provided of how the thresholds and predicted timestamps can be calculated by the program routine 104.

Given a datastream, e.g., in form of a time series of values of some physical parameter with following real clock timestamps and cycle counts that used to index the data. The time format is chosen to be HH:MM:SS.

**Table 1: exemplary real clock timestamps and cycle counts from data, e.g., the data 100.**

| Real clock timestamp | Cycle count |
|---|---|
| 10:10:10 | 333 |
| 10:10:20 | 343 |
| 10:10:50 | 353 |
| 10:11:05 | 363 |

I.e., in an embodiment, the virtual clock can correspond to a sampling rate of the physical parameter and the index value can correspond to the cycle count.

Said differently, the virtual clock can be seen as a representative of time elapsing when known physical actions are taking place, e.g., an axis movement of a CNC machine at known acceleration and speed, and preferably with known length of the movement. The elapsed time can then be correlated to a cycle counter or a wall clock.

From the provided data example, it seems that the period of the real clock of the data acquisition device is not constant, i.e., the time that passes between two next neighbor indexes varies.

**Table 2: real clock timestamps, cycle counts, instantaneous and predicted periods of the real clock and threshold/precision.**

| Real clock timestamp | Cycle count | Current period of the real clock | Predicted period of the real clock | Predicted timestam p | Precision |
|---|---|---|---|---|---|
| 10:10:10 | 333 | 1s | 1s | | 0s |
| 10:10:20 | 343 | 1s | 1s | 10:10:20 | 0s |
| 10:10:50 | 353 | not accepted | 1s | 10:10:30 | 0s |
| 10:11:05 | 363 | not accepted | | 10:10:40 | |

In other words, current or instantaneous periods 111 of the real clock can be determined based on two last values or two nearest neighbor values of the index values and of the corresponding real clock timestamps (see Table 2).

The predicted period can be calculated based on the current periods 111 for preceding index values. In an embodiment, the predicted period is calculated 112 using the least square method.

The instantaneous periods 111 is a list of all the stored (accepted) deltas (periods) for the algorithm disclosed herein (e.g., the last 5 minutes in an embodiment).

The predicted period can be used to calculate the predicted or expected timestamp 118 for the subsequent index values.

E.g., for a given cycle count 343, the predicted period of the real clock is 1s. Therefore, for the subsequent index value 353, the program routine 104 will predict a value of a timestamp of 10:10:30. However, the real clock timestamp for the cycle count 353 is 10:10:50, which indicates that there can be a problem with the real clock.

In this case, the difference between the real clock timestamp and the predicted timestamp is 20s.

Since there was no deviation for the current cycle count 343 - the predicted timestamp is equal to the real clock timestamp - the threshold is set to 0s.

Evidently 20s exceeds 0s, and the state of the real clock is not OK. In this case the current period of the real clock of 3s is not accepted, and the predicted value of the period of 1s is accepted together with a correction of the real timestamp from 10:10:50 to 10:10:30 for the cycle count 353.

In other words, the state of the real clock for the cycle count 353 is not accepted and the timestamp for this cycle count is recalculated as described above.

The predicted periods 113 of the real clock can be stored as described herein.

It will be appreciated that the current or instantaneous periods 111 are different from the predicted periods 113, as the predicted periods 113 refer to the eriod length predictions for a pre-determined period of time, e.g., for the last 5 minutes.

The instantaneous periods 111 are the raw input, whereas the predicted periods 113 are calculated values.

In an embodiment, the program routine 104 returns 114 the determined state 115 of the real clock and/or the precision/threshold 116. For example, the program routine 104 returns the determined state 115 of the real clock and/or the precision/threshold 116 in reaction to a respective call 117.

Depending on whether the acceptance criterion for the state of the real clock and of the respective real clock timestamp is met, the program routine 104 returns 119 if the state of the real clock and/or the real clock timestamp for the subsequent (queried or input) index value is acceptable or not.

In an embodiment, the software module 104 can comprise a functionality, where it provides only the information about the state of the real clock 120, if it is called 121 for this information.

In an embodiment, the program routine 104 can comprise a functionality 122 for inspecting the correctness of the real clock. In reaction to the respective call 122 the program routine 104 checks, e.g., as described herein, the current state of the real clock 123 and returns either the last real clock timestamp 124, if the current state of the real clock according to the index value, last available to the program routine 104, is acceptable, or the expected timestamp 125 otherwise.

In an embodiment, if the difference between the real clock timestamp with the predicted timestamp exceeds the threshold, the program routine 104 can recommend or cause a correction of the real clock timestamp based on the predicted timestamp.

In an embodiment, the software module 104 updates the real clock timestamp for the subsequent index value in the data 100 by the predicted timestamp for the subsequent index value.

It will be appreciated by the skilled person that although FIG 1 describes a situation where the real clock of the data acquisition device 101 is checked in the real-time, the methods described herein are also applicable for an off-line inspection.

For this the data 100 for example can be stored and provided to the program routine 104 at some later time. In particular, the inspection of the real clock timestamps of the data 100 can be performed prior to data's further processing, e.g., analysis, evaluation and alike.

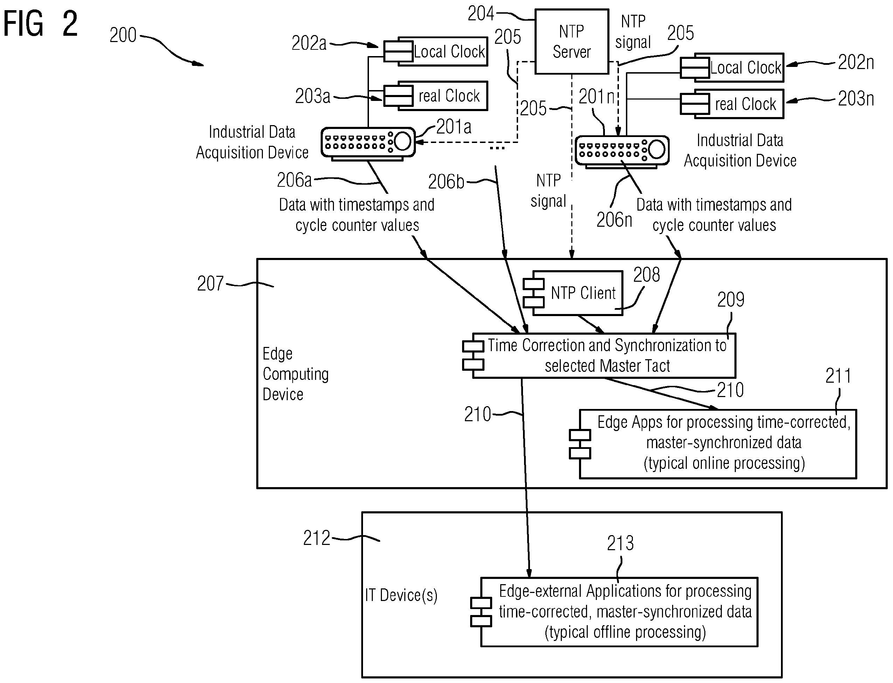

FIG 2 shows a flowchart of a method and an underlying system 200 corresponding to an aspect of the present invention.

It describes a real-time data acquisition method comprising correcting of timestamps of the collected data. It will be appreciated by the skilled person that correcting of timestamps can be performed off-line and not in real-time.

The system 200 comprises two or more, preferably a plurality of, industrial data acquisition devices 201a, ...,201n.

Each industrial data acquisition device 201a, ...,201n can comprise a respective local clock 202a, ...,202n and a respective real clock 203a, ..., 203n.

The industrial data acquisition devices 201a, ...,201n run respective data acquisition processes in their own tact, which is composed of cycles according to the respective local clock 202a, ...,202n. The acquired data can be a data sampled from analog or digital sensors (not shown) that can be connected or attached to the respective industrial data acquisition device 201a, ...,201n.

The industrial data acquisition devices 201a, ...,201n can comprise respective NTP-clients (not shown here for simplicity) that are used for synchronization of the respective real clocks 203a, ...,203n with an external NTP-server 204. To perform the synchronization the NTP-server 204 provides respective NTP-signals 205 to each NTP-client.

The NTP-server 204 can be designed as part of an NTP-pool on the Internet or a locally managed NTP-server in the Intranet or in the IT environment of the production plant, where industrial data acquisition devices are located 201a, ...,201n.

It will be appreciated by the skilled person that the NTP-framework illustrated in FIG 2 is only one of several examples for providing a global or a world clock as a time synchronization target for all observed data.

Other protocols, for example, precision time protocols, GPS signaling can be used directly or adapted for providing the global clock and, therefore, an accurate time stamp.

For other global clocks it can be of an advantage to provide a global clock analyzer to analyze the way of how the global clock functions or, in other words, to analyze the mode of operation of the global clock. The knowledge about the global synchronization behavior can be useful if it comes to performing synchronization of data from different industrial data acquisition devices 201a, ...,201n.

The industrial data acquisition devices 201a, ...,201n can be designed industrial controllers for controlling assets of an automation system, e.g., machine tools, electric motors, pumps etc.

The industrial data acquisition devices 201a, ...,201n are providing their data together with corresponding timestamp from the respective world clock. The local clocks 202a, ...,202n progress in essentially constant time steps and serve for indexing the respective datastreams 206a, ...,206n, so that each data point in the respective datastream 206a, ...,206n is assigned a pair of values: a timestamp and a respective index, e.g., a cycle count.

A computing device 207 receives data in form of different data streams 206a, ..., 206n.

The computing device 207 can be designed as an edge computing device.

The computing device can, but does not have to, comprise an NTP-client 208. The NTP-client 208 might bring an advantage and facilitate verification of whether a timestamp hallucinates and gives a completely wrong data (e.g., year 1970 or alike). The NTP-client 208 can also improve a rough verification of whether the current state of the global clock is roughly fine.

One of the main functions of the Edge Computing Device 207 is aggregating the data from one or multiple of the Industrial Data Acquisition Devices 201a, ...,201n.

The Edge Computing Device 207 can continuously, preferably in teal-time analyze the time information related to the input data 206a, ...,206n and identify anomalies in the series of timestamps and cycle counter values of each input data stream 206a, ...,206n including analysis of missing time slots or time jumps.

For example, in a sensor network monitoring a physical, e.g., a manufacturing, especially machining process, the cycle counter value can represent a count of measurement cycles that have occurred. This information can be useful for analyzing periodic patterns or identifying anomalies that deviate from the expected cycle behavior.

The anomalies in the timestamp value series are monitored and corrected and the data streams 206a, ...,206n can be synchronized by a timestamp correction and time synchronization module 209.

For this the timestamp correction and time synchronization module 209 comprises as a program routine that provides the world clock timestamps or predicted timestamps for the respective cycle counter values based on an acceptance criterion related to the real clock timestamp and to the predicted timestamp. The program routine is a program routine described herein, e.g., the program routine 104 of FIG 1.

The timestamp correction and time synchronization module 209 can select a (single) data stream, e.g., the datastream 206a, from the data streams 206a, ..., 206n that to be a master datastream for time synchronization. The selection of the master datastream can be performed once for the whole process of synchronization.

In an embodiment, the master data stream 206a is a high frequency data stream.

After monitoring and correcting the timestamps in the master datastream 206a the timestamp correction and time synchronization module 209 can align the timestamps of the respective other data streams 206b, ..., 206n to the master datastream 206a.

It will be appreciated that the time correction and synchronization module 209 can monitor and correct the global clock timestamps of each of the provided datastreams 206b, ..., 206n independently.

The data streams 206a, ...,206n can comprise high frequency data or low frequency data or both.

In an embodiment, the high frequency data comes from an industrial automation controller that is the primary controller for an industrial asset. In an embodiment, the industrial automation controller is the primary controller for a CNC machine, i.e., the controller that is responsible to control axes movements of a CNC machine.

The term primary controller as used herein refers to a controller that drives the main use case of the application domain while secondary manages dependent control flows. E.g., in the CNC domain, the CNC as primary controller moves the axes and spins the spindle to drill and cut material according to the main milling or turning use case of the machine, while secondary data sources such as further controllers or sensor systems manage and provide information related to secondary use-case-related process(es), for instance information about one or more of the following: a status of a door of the CNC machine, a connected tool magazine device, a tool or workpiece loading robot, a palette shifter, a coolant flow controller, etc.

Another example in the automotive domain: here the primary controller can be an automotive electronic control unit taking care about safe driving from A to B, while secondary could be multimedia, heating or air conditioning environmental control or a navigation system that can help make driving more comfortable or efficient.

Another example in the infrastructure domain: in a building a primary controller can be a building management and control system for lights, heating, ventilation and air conditioning, while secondary systems could be security surveillance systems, energy market price or weather observation systems or other kinds of secondary monitoring and control systems.

The acquired data and, therefore, the data in the data streams 206a, 206b, ..., 206n can comprise data related to one or more CNC machines, i.e., the data coming from other controllers in the context of the CNC machine, e.g., PLCs, that can be controlling a magazine tool system, the lights, the coolant flow, ventilators, or doors of the CNC machines. Moreover, it can comprise data acquired from additional sensor systems such as from vibration sensors, temperature sensors, force measurements sensors and alike.

The timestamp correction and time synchronization module 209 determines time-related properties and in particular time properties, i.e., temporal attributes associated with each data point, for example the timestamp of the data of the primary or master datastream 206a.

In other words, the timestamp correction and time synchronization module 209 synchronizes data from at least one secondary data stream 206b, ..., 206n onto the primary data stream 206a according to the data time-related properties, in particular time properties of the primary datastream 206a.

In an embodiment, after correcting and aligning the timestamps of the plurality of the datastreams 206a, 206b, ..., 206n, the timestamp correction and time synchronization module 209 can provide at least part of the timely synchronized plurality of the datastreams 210 for further preferably real-time processing 211 of this time-corrected, and mastersynchronized data 210, e.g., on the Edge computing device 207 and/or to some other IT device(s) 212 (e.g., a server on the shopfloor or a server in the Cloud) for further preferably off-line processing 213 of the time-corrected, and mastersynchronized data 210.

The IT device(s) 212 preferably have large computational resources for processing large histories of aggregated data in a batch-based (offline) manner getting analytical insights by crawling massive amounts of pre-integrated data.

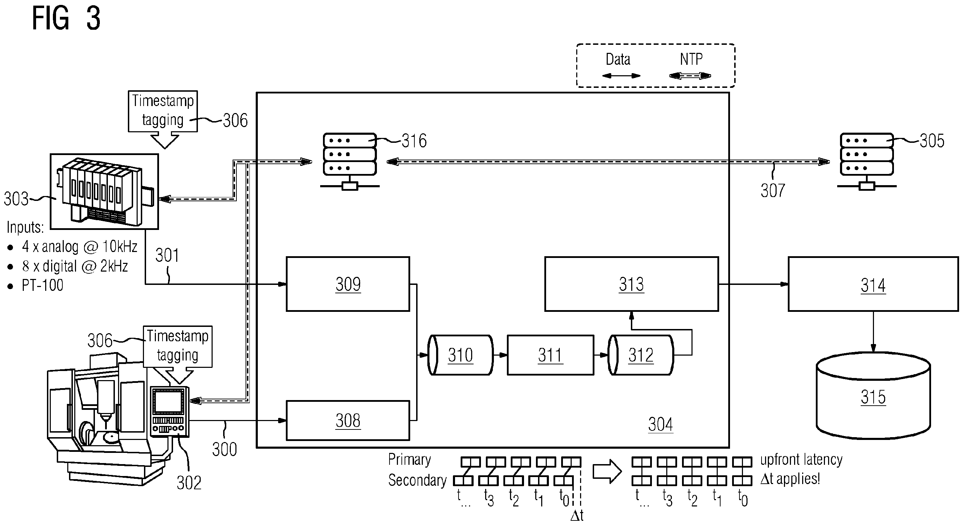

FIG 3 illustrates an embodiment to synchronize a second data stream 301 with a first data stream 300.

The system comprises three hardware devices - a first data acquisition device 302, a second data acquisition device 303, and the data aggregation device 304. All three hardware devices are synchronized with a global NTP server 305.

The first on the second data acquisition devices 302 and 303 are designed as preferably different numerical control units (NCUs) that sample physical parameters with different sampling rates and perform timestamp tagging 306 according to the global clock 307 provided by the global NTP server 305.

The data aggregation device 304 is preferably designed as an Edge computing device and receives the first data stream 300 from the first NCU 302 and the second data stream 301 from the second NCU 303.

In an embodiment, the primary stream of data 300 provided by the first NCU 302 comprises batches of 200 values for each up to 200 NCU signals.

In an embodiment, the values in the first data stream 300 are sampled in a 2ms interval into data batches, and the batches are sent essentiality every 200ms to the data aggregation device 304.

In an embodiment, the secondary data stream 301 can contain values from different analog and/or digital inputs. In an embodiment, the sampling rate for sampling of analog inputs is different from the sampling rate for sampling of digital inputs.

For example, the secondary data stream 301 can contain values from, e.g., four analog inputs of, e.g., vibration signals sampled for example at 10kHz, and/or from, e.g., eight digital inputs sampled at 2kHz and from a temperature sensor, e.g., a PT-200 sensor, sampled at 2kHz. Also, here the data can be first organized into batches on the NCU's side before transferred as bulk data to the data aggregation device 304.

The data aggregation Edge device 304 can comprise two adapter software components 308 and 309 running on the Edge device 304 to facilitate receiving the first and the second data stream 300 and 301 from the first and the second NCU 302 and 303 respectively. In other words, the first adapter software component 308 is responsible to acquire the data from first NCU 302, the second adapter software component 309 receives the data from the second NCU 303.

Different adapter software components 308 and 309 are especially convenient, when different NCUs 302, 303 communicate with the data aggregation device 304 according to different communication protocols. In other words, the adapter software components 308 and 309 facilitate communication between the data aggregation device 304 with different NCUs 308, 309 that support different communication protocols.

It will be appreciated by the skilled person that there can be more data streams and adapters respectively (see FIG 2).

After acquiring the data by the adapters 308 and 309 both the primary and the secondary data stream 300 and 301 are forwarded, preferably without integration, e.g., over a databus 310 to a software module 311 executable under the data aggregation device 304 and preferably running during aggregation of the data 300 and 301 by the data aggregation device 304.

The software module 311 is applying the mechanism for a robust clock described herein that synchronizes the secondary stream 301 with the primary stream 300 while preferably detecting and correcting potential anomalies / quality issues in the time stamping process on the data source side of the primary stream 300.

For example, the software module 311 can comprise the timestamp correction and time synchronization module 209 of FIG 2 and select the primary data stream 300 as a master datastream to synchronize the secondary data stream 301 with it.

Four detecting and correcting potential anomalies and/or quality issues in the time stamping process on the data source side of the primary stream 300 the software module 311 can use a program routine such as program routine 104 of FIG 1.

In an embodiment, the output of the software module 311 can be an integrated and - regarding time relations - harmonized stream of data that comprises both the data from the primary and the secondary stream 300 and 301 with improved accuracy time mappings to the master clock of the data source 302 of the primary stream 300.

The output data can be provided wire in output data bus 312.

The output data can be read, analyzed and further processed, e.g., stored in a database 315, by Edge-internal 313 and/or Edge-external 314 applications. E.g., and Edge App 313 can scan the output data for trigger conditions and record the data based on selected start and end triggers in any of the data streams. Among others, the triggers may be defined with time-based references to a cycle counter or a timestamp. The recordings contain the data preferably from all selected streams (here 300 and 301) and can be exported for further processing outside of the data aggregation device 304.

As described herein, the data aggregation device 304 can comprise an NTP client 316 for the global clock synchronization.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. Method for monitoring timestamps in a data (100) acquired by a data acquisition device (101,201a, ..., 201n,302,303), wherein the data acquisition device (101,201a, ..., 201n,302,303) comprises a real clock (203a,...,203n), according to which the timestamps (102) are allocated to the data, and a virtual clock (202a,...,202n) progressing in essentially constant steps, according to which the data (100) is indexed (103),
the method comprising:
- receiving an index value (103, 103a) and a respective timestamp (102, 102a) from the data (100),
- predicting a timestamp for a subsequent index value, based on the index value and the respective timestamp and on preceding index values (103) and respective timestamps (102), to generate a predicted timestamp for the subsequent index value,
- receiving a real clock timestamp for the subsequent index value,
- based on an acceptance criterion related to the real clock timestamp and to the predicted timestamp, providing the real clock timestamp or the predicted timestamp for the subsequent index value.

2. Method of Claim 1, depending on whether a difference between the real clock timestamp and the predicted timestamp exceeds a determined threshold, providing the real clock timestamp or the predicted timestamp for the subsequent index value.

3. Method of Claim 2, further comprising: determining the threshold based on the previous index values and the respective real clock and predicted timestamps.

4. Method of any one of Claims 1 to 3, further comprising, based on an acceptance criterion related to the real clock timestamp and to the predicted timestamp, causing to correct the real clock timestamp based on the predicted timestamp.

5. Method of any one of Claims 1 to 4, further comprising, based on an acceptance criterion related to the real clock timestamp and to the predicted timestamp, updating the real clock timestamp for the subsequent index value by the predicted timestamp for the subsequent index value.

6. Method of any one of Claims 1 to 5, further comprising: storing the previous index values and the respective timestamps for a predetermined time period.

7. Method of any one of Claims 1 to 6, wherein the data is a measurement data (300, 301) of at least one physical parameter of an asset of an automation system.

8. Method of any one of Claims 1 to 7, wherein the data is a datastream.

9. Method of any one of Claims 1 to 8, wherein a first data (300) acquired by a first data acquisition device (302) and a second data (301) acquired by a second data acquisition device (303), wherein the data acquisition devices comprise respective virtual clocks and their real clocks are jointly synchronized to a global clock (307), the method further comprising:
- monitoring the timestamps in the first data (300), and
- aligning the timestamps in the second data (301) to the timestamps in the first data (300).

10. Computer program comprising instructions, which, when executed by a computer, cause the computer to perform steps of the method according to any one of claims 1 to 9.

11. System for data acquisition comprising at least two data acquisition devices (201a, ..., 201n,302,303) adapted to acquire data related to an industrial process and to provide respective datastreams (206a, ..., 206n,300,301) and a data aggregation device (207,304) adapted to receive the datastreams (206a, ..., 206n,300,301) and comprising a computer program (209,311) of Claim 10, wherein the data aggregation device (207,304) is configured to
- allow to select at least one of the datastreams to be a master datastream (206a,300),
- process the master datastream (206a,300) by the computer program (209,311) to correct the timestamps of the master datastream (206a,300),
- synchronize the at least one other datastream (206b,...,206n,301) of the at least two data streams to the master datastream (206a,300).
